# FASCICULE DE BREVET EUROPEEN

(11) **EP 0 478 445 B1**
(45) Date de publication et mention de la délivrance du brevet: **17.12.1997**
(21) Numéro de dépôt: 91402544.0
(22) Date de dépôt: 24.09.1991
(51) Int. Cl.: C11D 3/48, C11D 1/94, A01N 33/12

(54) **Composition d'agent nettoyant-décontaminant, notamment pour instruments chirurgicaux**
Zusammensetzung zur Reinigung und Entseuchung, insbesondere von chirurgischen Instrumenten
Composition for cleaning and decontaminating, in particular surgical instruments

(30) Priorité: 28.09.1990 FR 9012035
(43) Date de publication de la demande: 01.04.1992
(73) Titulaire: PETERS, 93000 Bobigny (FR)
(72) Inventeur: Kassentini, Philippe, F-95230 Soisy sous Montmorency (FR)
(74) Mandataire: Phélip, Bruno

(56) Documents cités:
- EP-A- 0 024 031
- EP-A- 0 247 832
- EP-A- 0 389 648
- - "Römpp Chemie Lexikon", prof, Dr. J. Falbe et Prof. Dr. M. Regitz, Georg Thieme Verlag. 9ème édition, 1989, p. 115; - "Hackh's Chemical Dictionary", J. Grant, MaGraw-Hill, 4ème édition, 1972, p. 27; - "Fachlexikon: ABC Chemie", Verlag Harri Deutsch, 2ème édition, 1979, p. 46; - "Nomenclature of Organic Chemistry" de I.U.P.A.C, J. Rigaudy et S.P. Klesney, Pergamon Press, 1979; pp. 5-13; - "Dictionnaire de la Chimie et de ses applications", C. Duval et R. Duval, Technique et Documentation, 3ème édition, p.

## Description

La présente invention concerne une composition d'agent nettoyant-décontaminant, notamment pour instruments chirurgicaux, qui est dépourvue d'aldéhydes et de phénols.

L'infection hospitalière est un phénomène préoccupant par ses implications humaines et financières.

Il est bien connu que l'infection nosocomiale accroît le coût du traitement médical hospitalier et en particulier la consommation d'antibiotiques dont on connaît aujourd'hui les conséquences à terme sur la santé des malades.

Pour lutter contre l'infection nosocomiale, la désinfection est rendue indispensable à différents niveaux, sols et surfaces, instruments et matériel médico-chirurgical, voie aérienne.

La désinfection est un ensemble d'opérations qui tendent à réduire le nombre de germes pathogènes à un seuil acceptable, voire même les détruire.

Les principes actifs les plus utilisés actuellement pour la désinfection en milieu hospitalier sont le formaldéhyde et le glutaraldéhyde.

Les aldéhydes sont des désinfectants efficaces mais malheureusement ils présentent une forte toxicité pour l'utilisateur et parfois pour le malade.

De tous les aldéhydes, le formaldéhyde semble détenir la première place sur le plan de la toxicité. Ainsi l'inhalation de formaldéhyde provoque chez l'homme des larmoiements à partir de 0,1 ppm, de l'irritation des voies aériennes supérieures avec rhinite pharyngite et laryngite à partir de 1 à 5 ppm et de l'oedème pulmonaire à 50 ppm.

A l'hôpital, l'utilisation de formaldéhyde en quantité importante dans les laboratoires d'anatomopathologie et dans les unités d'hémodialyse a été à l'origine d'intoxications aigües.

Les solutions aqueuses de formaldéhyde sont très irritantes et peuvent entraîner de sévères brûlures oculaires selon la concentration des solutions.

Une irritation oculaire superficielle peut être rencontrée chez certaines personnes exposées au formaldéhyde à partir de 0,4 ppm.

En action locale sur les muqueuses, le contact du formaldéhyde peut provoquer de l'irritation, l'altération des couches cornées ou des liaisons exzématiformes.

Le glutaraldéhyde en inhalation prolongée peut entraîner chez l'homme des irritations du système respiratoire accompagnées de quintes de toux.

Le glutaraldéhyde seul ou associé à d'autres principes actifs souvent aldéhydiques est très utilisé en milieu hospitalier pour la décontamination par trempage de matériels qui ne peuvent supporter la stérilisation à haute température et pour qui la durée de désorption après stérilisation à l'oxyde d'éthylène en limite l'usage (matériel d'endoscopie).

Les dérivés phénoliques comme l'orthophénylphénol, le benzylphénol, le parachlorométacrésol, le parachlorobenzylphénol, le parachlorométaxylénol, le dichlorophène, le pentachlorophénol, la tétrachlorobenzo-p-dioxine sont toxiques.

EP-A-0 389 648 décrit un savon bactéricide pour les mains comportant un composé amphotère, il ne s'agit pas d'une composition d'agent nettoyant décontaminant notamment pour instruments chirurgicaux.

EP-A-0 024 031 concerne une composition de nettoyage ayant une aptitude à la formation de mousse perfectionnée. Cette composition de nettoyage comporte au moins un agent tensioactif à base d'ester de polyéthylène glycol, de bétaines, des oxydes d'amine, de l'eau et un mélange d'alcool.

EP-A-0 247 832 concerne une composition détergente comprenant, en milieu aqueux, au moins un tensioactif amphotère et au moins un tensioactif cationique.

Il existe donc un besoin de disposer d'une composition d'agent nettoyant-décontaminant non toxique susceptible de remplacer en milieu hospitalier les aldéhydes et les phénols toxiques.

Le nettoyant-décontaminant doit présenter deux propriétés simultanées, d'une part, une propriété détergente pour nettoyer à fond les éléments souillés et d'autre part, une activité bactéricide intense à large spectre microbien.

Selon la présente invention on a d'abord trouvé qu'un constituant satisfaisant pour une composition d'agent nettoyant-décontaminant était un tensio-actif amphotère comportant un greffage de groupes cationiques. En effet l'association de ces deux fonctions dans une même molécule permet de mettre au point des formulations possédant un bon pouvoir désinfectant et également un excellent effet détergent en raison de la structure amphotère. De plus, ces composés ne présentent aucun danger sur le plan toxicologique et écologique. Ces produits offrent une meilleure compatibilité avec la peau que les agents de désinfection purement cationiques.

On a également trouvé, selon la présente invention, qu'il était avantageux de combiner une quantité synergique de composé cationique ammonium quaternaire à un composé amphotère du type précité, sur lequel sont greffés des groupes ammonium quaternaires, pour obtenir tant un effet biocide qu' un effet détergent.

Selon la présente invention la composition d'agent nettoyant-décontaminant, notamment pour instruments chirurgicaux renferme:
(a) un composé amphotère sur lequel est greffé au moins un groupe ammonium quaternaire,
(b) un composé cationique ammonium quaternaire ayant un effet bactéricide, et
(c) un alcool éthoxylé biodégradable non ionique détergent, et en ce que le rapport pondéral de b) : a) est de 1 à 6 et préférentiellement de 2.

Dans la présente invention le composé a) représente de 5 à 30%, de préférence, de 5 à 15% du poids total de la composition.

La composition de l'invention comprend, en outre:
(d) au moins un mélange d'alcools en C₁ à C₈;
(e) un composé détergent amphotère ayant une bonne tolérance cutanée;
(f) un chélate;
(g) un agent modificateur de contrôle du pH;
(h) un inhibiteur de corrosion; et
(i) un surgraissant destiné à assurer la stabilité de la mousse du produit.

Dans la composition de la présente invention:
- le composé c) est utilisé à raison de 3 à 20%, de préférence de 5 à 15% du poids total de la composition;
- le composé d) est utilisé à raison de 3 à 20%, de préférence, de 5 à 15% du poids total de la composition;
- le composé e) est utilisé à raison de 1 à 15% , de préférence de 2 à 5% du poids total de la composition;
- le composé f) est utilisé à raison de 1 à 7% de préférence de 2 à 4% du poids total de la composition;
- le composé h) est utilisé à raison de 1 à 5% de préférence 2% du poids total de la composition;
- le composé i) est utilisé à raison de 1 à 5% de préférence 1% du poids total de la composition.

Le composé a) répond à la formule générale: 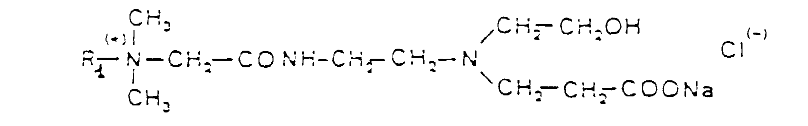 dans laquelle R₁ représente une chaîne d'acide gras saturé ou non saturé.

Le composé a) est la N|N'(N"-2-hydroxyéthyl-N"-carboxyéthylaminoéthyl) amidoacétate|-N,N-diméthyl-N-coco-ammoniumbétaine.

Le composé b) répond à la formule générale: 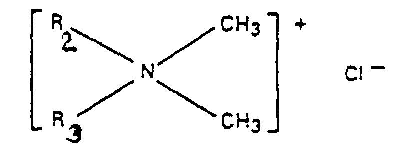 dans laquelle R₂ et R₃ sont des groupes alkyles en C₁ à C₁₅.

Le composé b) est le chlorure de didécyldiméthylammonium,

l'alcool éthoxylé biodégradable non-ionique détergent est un agent de surface non ionique à base d'un alcool oxo saturé de formule:

R₄O(CH₂CH₂O)ₓH

où R₄ est i-C₁₃H₂₇ et x = 3, 5, 7, 8 ou 12.

L'alcool éthoxylé biodégradable non ionique détergent répond à la formule:

i-C₁₃H₂₇O(CH₂CH₂O)₈H

L'alcool inférieur est un mélange d'alcools en C₁ à C₈. Le mélange d'alcools est constitué d'éthanol et d'isopropanol.

Le composé e) répond à la formule générale: 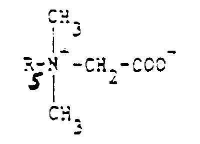 dans laquelle R₅ représente un acide gras saturé ou non saturé.

Le composé e) est la lauryldiméthylcarboxyméthylammonium bétaine.

Le composé f) est l'acide éthylène-diamine-tétra-acétique de formule:

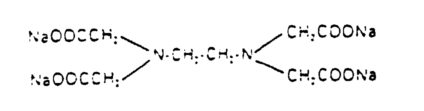

Le composé g) est l'acide citrique.

Le composé h) répond à la formule générale: 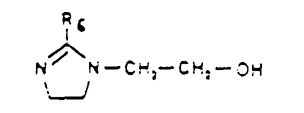 dans laquelle R₆ est un radical alkyle en C₁₀ à C₂₀.

Le composé h) est la 1-hydroxyéthyl-2-heptadécényl-imidazoline.

Le composé i) répond à la formule générale: 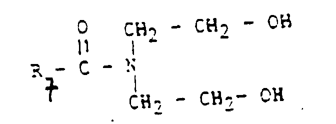 dans laquelle R₇ est un reste d'acide gras saturé ou non saturé.

Le composé i) est le diéthanolamide d'acide oléique;

On a observé lors de la mise en oeuvre de différents essais que l'utilisation de quantités autres que celles indiquées ne permet pas d'obtenir de bons résultats.

Sauf indication contraire, toutes les parties et pourcentages sont calculés en poids.

On indique ci-après un exemple de mise en oeuvre préféré de la composition de l'invention, les quantités indiquées étant exprimées en % de la composition totale.
- N|N'(N"-2-hydroxyéthyl-N"-carboxyéthylaminoéthyl) amidoacétate|-N,N-diméthyl-N-co co-ammoniumbétaine 7%
- chlorure de didécyl diméthyl ammonium 13%
- isotridécanol éthoxylé à 8 moles d'oxyde d'éthylène 7%
- éthanol-isopropanol 12%
- lauryldiméthylcarboxyméthylammonium bétaine 3%
- acide éthylène diaminetétraacétique 3%
- 1-hydroxy-éthyl-2-heptadécényl-imidazoline 1%
- diéthanolamide d'acide oléique 1%
- acide citrique quantité suffisante pour obtenir un pH de 8,5 ± 0,5

La composition ci-dessus est obtenue dans un agitateur sous agitation modérée pendant une durée de deux heures environ. On mélange les composés dans l'ordre mentionné. Pour l'usage final, on dilue avec de l'eau à raison d'environ 30 ml de solution pour 5 litres d'eau, soit une concentration d'utilisation de 0,6%.

Le produit de la présente invention est une solution limpide de couleur ambrée d'une densité de 0,99. Son pH est de 8,3 ± 0,2 et sa biodégradabilité est supérieure à 90%.

La N|N'(N"-2-hydroxyéthyl-N"-carboxyéthylaminoéthyl) amidoacétate|-N,N-diméthyl-N-coco-ammoniumbétaine est un liquide limpide jaunâtre à 20°C. Elle est utilisée à raison d'environ 7% et elle présente les caractéristiques ci-après:
couleur (Gardner): 3-5
matières solides (%): 50 ± 1
pH (à 10%): 8-9
teneur en NaCl (%): 5,5-6,2
teneur en éthanol: (%) environ 10
caractère cationique

Il s'agit d'un tensio-actif amphotère cationique ayant à la fois la bonne compatibilité envers la peau des amphotères et l'effet biocide des quaternaires. Ce tensio-actif est compatible avec les tensio-actifs non ioniques et amphotères et est partiellement miscible avec les tensio-actifs cationiques. Il est soluble de façon limpide dans l'eau, l'éthanol, l'isopropanol. Son domaine d'utilisation est pH 4-10. Sa valeur moussante selon la norme DIN 53901 est de 180/0 et son pouvoir mouillant selon la norme DIN 53901 est de 1 mn 4 secondes.

Le chlorure de didécyl-diméthylammonium est utilisé à raison d'environ 13%. Il est dépourvu de noyaux phényliques et comporte deux chaînes hydrocarbonées en C₁₀ reliées à l'atome d'azote central.

L'isotridécanol éthoxylé à huit moles d'oxyde d'éthylène répond à la formule C₁₃H₂₇O(CH₂CH₂O)₈H, il s'agit d'un agent de surface non ionique sous forme d'un liquide incolore. Il est utilisé dans un rapport pondéral de 1:5 vis-à-vis de la N|N' (N"-2-hydroxyéthyl-N"-carboxyéthylaminoéthyl) amidoacétate|-N,N-diméthyl-N-coco-ammoniumbétaine et du chlorure de didécyle diméthylammonium.

La lauryldiméthylcarboxyméthylammonium bétaine est un liquide jaune clair à température ambiante, sa teneur en matière solide est au minimum de 39%, son pH à 20°C est de 7 à 8. Il s'agit d'un amphotère à teneur maximale en NaCl de 7%. Ce composé est fortement moussant et possède un bon pouvoir lavant. Il se comporte comme un tensio-actif anionique en milieu basique. Il est amphotère dans la zone de pH 5 à 7. Comme tous les amphotères il est miscible avec des tensio-actifs anioniques, non ioniques et cationiques. Il forme avec eux des solutions claires. Il n'irrite ni les muqueuses ni les yeux.

L'acide éthylène diamine-tétra-acétique est un chélate. Il piège le calcium de l'eau et agit sur la dureté de l'eau.

La 1-hydroxyéthyl-2-heptadécényl-imidazoline est un liquide visqueux, soluble dans la plupart des solvants polaires et apolaires. Elle est dispersible dans l'eau. Elle assure un bon effet anti-corrosion.

Le diéthanolamide d'acide oléique est un liquide jaune visqueux à 22°C. C'est un agent surgraissant améliorant l'aspect de la mousse et la stabilité des émulsions. Il procure une amélioration du pouvoir détergent.

Le produit de l'invention est une solution concentrée très active. La dilution d'emploi est de 0,6%, soit 30 ml pour 5 litres d'eau froide ou tiède.

Le conditionnement peut être assuré sous forme de sachet de 30 ml, de flacon d'un litre ou de bidon de 5 litres.

L'activité anti-microbienne du nettoyant-décontaminant de la présente invention a été mise en évidence selon les normes AFNOR.

Les normes AFNOR sont respectivement:
- NFT 72 151: détermination de l'activité bactéricide, actif à 0,25%
- NFT 72 171: détermination de l'activité bactéricide en présence de substances interférentes:
- en présence de protéines: 0,5%
- en présence d'eau dure: 0,5%
- en conditions de saleté: 0,5%

NFT 72 190: détermination de l'activité bactéricide pour les désinfectants de contact (méthode de porte-germes)
- actif à 0,6%

NFT 72 201: détermination de l'activité fongicide sur le Candida albicans
- actif à 0,1%

### A) Détermination de l'activité bactéricide selon la norme AFNOR NFT 72 151 (méthode par filtration sur membranes):

### 1) Conditions expérimentales:

Température d'essai: 20°C ± 1°C
Diluant du produit: eau distillée stérile

### 2) Mode opératoire déterminé à la suite de l'essai préliminaire:

. Référence et nature des membranes:
   SARTORIUS 13906-47 ACN, nitrate de cellulose, porosité 0,45 um, blanches, quadrillées.
. Liquide de lavage des membranes:
   Nature: eau distillée additionnée de 0,5% (v/v) de Tween 80.
   Mode de préparation: autoclavage à 121°C pendant 25 minutes.
   Nombre de lavages avec ce liquide: 3
   Volume de liquide utilisé pour chaque lavage: 50 ml
. Neutralisant(s) ajouté(s) au milieu de dénombrement et concentration (s): néant
. Autres additions au milieu de dénombrement:
   . 0,0025% (p/v) de chlorure de triphényl tétrazolium pour une meilleure visualisation des colonies.
   . pour Enterococcus hirae, utilisation d'un milieu gélosé D. Coccosel (BIOMERIEUX 51251) à l'esculine, qui noircit en présence d'entérocoques.

### 3. Résultats des essais préliminaires dans les conditions décrites:

| Concentrations essayées du produit de l'invention | Souches, collection d'origine et numéro dans la collection | N* | N'** | n*** |
|---|---|---|---|---|
| 1% (v/v) | Pseudomonas aeruginosa CIP A22 | 157 | 154 | 142 |
| 1% (v/v) | Escherichia coli CIP 54 127 | 164 | 154 | 114 |
| 1% (v/v) | Staphylococcus aureus CIP 53 154 | 156 | 131 | 126 |
| 1% (v/v) | Enterococcus hirae CIP 58 55 | 131 | 114 | 115 |
| 1% (v/v) | Mycobacterium smegmatis CIP 7326 | 127 | 98 | 97 |

| | | | | |
|---|---|---|---|---|
| *N = contrôle inoculum; | | | | |
| **N' = témoin de filtration; | | | | |
| ***n = essai préliminaire | | | | |

### 4) Essai proprement dit:

Résultats expérimentaux:

| Souches,collection d'origine et numéro dans la collection | N | n | N' | X Concentration en pourcentage v/v au contact avec les microorganismes | | | | | pH | |
|---|---|---|---|---|---|---|---|---|---|---|
| | | | | 0,1 | 0,25 | 0,5 | 0,75 | 1 | Cmin | Cmax |
| Pseudomonas aeruginosa CIP A22 | 137 | 142 | 154 | 108 | 33 | 4 | 0 | 2 | 5,8 | 4,3 |
| Escherichia coli CIP 54 127 | 164 | 114 | 154 | 179 | 4 | 0 | 0 | 0 | 6,0 | 4,3 |
| Staphylococcus aureus CIP 53 154 | 156 | 126 | 131 | 0 | 0 | 0 | 0 | 0 | 4,7 | 4,1 |
| Enterococcus hirae CIP 5 855 | 131 | 115 | 114 | 26 | 0 | 0 | 0 | 0 | 5,8 | 4,1 |
| Mycobacterium CIP 7326 | 127 | 97 | 98 | 110 | 4 | 0 | 0 | 0 | 5,8 | 7,1 |
| + = plus de 150 colonies | | | | | | | | | | |

Sont bactéricides les concentrations pour lesquelles:
X est inférieur ou égal à N' si N, N' et n sont équivalents.

### Conclusion:

Le produit de l'invention présente à 20°C une activité bactéricide spectre 5 conforme à la norme NF T72-151.

### B) Détermination de l'activité bactéricide en présence d'une substance interférente selon la norme NF T72-171 (méthode par filtration sur membranes):

### 1) Conditions expérimentales:

. température d'essai: 20°C ± 1°C
. diluant du produit: eau distillée stérile
. substance interférente: protéines: albumine bovine 1% + extrait de levure 1%
Stabilité en présence du produit: absence de précipité

### 2. Mode opératoire déterminé à la suite de l'essai préliminaire:

. nature des membranes et référence:
   SARTORIUS 13 906-47 ACN, porosité 0, 45 um, blanches, quadrillées.
. liquide de rinçage:
   Nature: eau distillée additionnée de 0,5% (v/v) de tween 80
   Mode de préparation: autoclavage à 121°C pendant 25 minutes
   Nombre de lavages avec le diluant: 3
   Volume du diluant utilisé pour chaque lavage: 50 ml
. neutralisant(s) ajouté(s) au milieu de dénombrement et concentration(s): néant
. autres additions au milieu de dénombrement:
. 0,0025% (p/v) de chlorure de triphényl tétrazolium pour une meilleure visualisation des colonies
. pour Enterococcus hirae, gélose D. Coccosel (BIOMERIEUX 51251) à l'esculine, qui noircit en présence d'entérocoques.

### 3) Résultats des essais préliminaires dans les conditions décrites:

| Concentrations essayées du produit de l'invention | Souches, collection d'origine et numéro dans la collection | N | N' | n |
|---|---|---|---|---|
| 1% (v/v) | Pseudomonas aeruginosa CIP A22 | 116 | 110 | 116 |
| 1% (v/v) | Escherichia coli CIP 54 127 | 127 | 99 | 77 |
| 1% (v/v) | Staphylococcus aureus CIP 53 154 | 158 | 137 | 135 |
| 1% (v/v) | Enterococcus hirae CIP 5 833 | 152 | 145 | 143 |

### 4) Essai proprement dit:

Résultats expérimentaux:

| Souches,collection d'origine et numéro dans la collection | N | n | N' | X Concentration en pourcentage v/v au contact avec les microorganismes | | | | | pH | |
|---|---|---|---|---|---|---|---|---|---|---|
| | | | | 0,1 | 0,25 | 0,5 | 0,75 | 1 | Cmin | Cmax |
| Pseudomonas aeruginosa CIP A22 | 116 | 116 | 110 | + | + | 31 | 0 | 0 | 6,9 | 5,9 |
| Escherichia coli CIP 54 127 | 127 | 77 | 99 | 0 | 0 | 0 | 0 | 0 | 6,9 | 5,9 |
| Staphylococcus aureus CIP 53 154 | 158 | 135 | 137 | 0 | 0 | 0 | 1 | 0 | 6,9 | 5,9 |
| Enterococcus hirae CIP 5 855 | 152 | 143 | 145 | 23 | 5 | 0 | 0 | 0 | 6,9 | 5,9 |

| | | | | | | | | | | |
|---|---|---|---|---|---|---|---|---|---|---|
| + = plus de 150 colonies | | | | | | | | | | |

Sont bactéricides les concentrations pour lesquelles:
X est inférieur ou égal à N' si N, N' et n sont équivalents.

### Conclusion:

Le produit de l'invention présente à 20°C une activité bactéricide spectre 4 en présence d'albumine et d'extrait de levure conforme à la norme NF T72-151.

### C) Détermination de l'activité bactéricide en présence d'une substance interférente selon NF T 72-171 (méthode par filtration sur membranes):

### 1) Conditions expérimentales:

. température d'essai: 20°C ± 1°C
. diluant du produit: eau distillée stérile
. substance interférente: eau dure à 60° français
Stabilité en présence du produit: absence de précipité

### 2. Mode opératoire déterminé à la suite de l'essai préliminaire:

. nature des membranes et référence:
   SARTORIUS 13 906-47 ACN, porosité 0,45 um, blanches, quadrillées.
. liquide de rinçage:
   Nature: eau distillée additionnée de 0,5% (v/v) de tween 80
   Mode de préparation: autoclavage à 121°C pendant 25 minutes
   Nombre de lavages avec le diluant: 3
   Volume de diluant utilisé pour chaque lavage: 50 ml
. neutralisant(s) ajouté(s) au milieu de dénombrement et concentration(s): néant
. autres additions au milieu de dénombrement:
. 0,0025% (p/v) de chlorure de triphényl tétrazolium pour une meilleure visualisation des colonies
. pour Enterococcus hirae, gélose D. Coccosel (BIOMERIEUX 51251) à l'esculine, qui noircit en présence d'entérocoques.

### 3) Résultats des essais préliminaires dans les conditions décrites:

| Concentrations essayées du produit de l'invention | Souches, collection d'origine et numéro dans la collection | N | N' | n |
|---|---|---|---|---|
| 1% (v/v) | Pseudomonas aeruginosa CIP A22 | 103 | 69 | 64 |
| 1% (v/v) | Escherichia coli CIP 54 127 | 127 | 99 | 100 |
| 1% (v/v) | Staphylococcus aureus CIP 53 154 | 158 | 137 | 125 |
| 1% (v/v) | Enterococcus hirae CIP 5 833 | 152 | 145 | 147 |

### 4) Essai proprement dit:

Résultats expérimentaux:

| Souches,collection d'origine et numéro dans la collection | N | n | N' | X Concentration en pourcentage v/v au contact avec les microorganismes | | | | | pH | |
|---|---|---|---|---|---|---|---|---|---|---|
| | | | | 0,1 | 0,25 | 0,5 | 0,75 | 1 | Cmin | Cmax |
| Pseudomonas aeruginosa CIP A22 | 103 | 64 | 69 | 18 | 41 | 5 | 8 | 10 | 4,1 | 3,8 |
| Escherichia coli CIP 54 127 | 127 | 100 | 99 | 55 | + | 4 | 11 | 43 | 4,3 | 3,9 |
| Staphylococcus aureus CIP 53 154 | 158 | 137 | 125 | 0 | 0 | 1 | 0 | 0 | 4,3 | 3,9 |
| Enterococcus hirae CIP 5 855 | 152 | 147 | 145 | 0 | 0 | 0 | 0 | 0 | 4,2 | 3,8 |

| | | | | | | | | | | |
|---|---|---|---|---|---|---|---|---|---|---|
| + = plus de 150 colonies | | | | | | | | | | |

Sont bactéricides les concentrations pour lesquelles:
X est inférieur ou égal à N' si N, N' et n sont équivalents.

### Conclusion:

Le produit de l'invention présente à 20°C une activité bactéricide spectre 4 en eau dure conforme à la norme NF T72-171.

### D) Détermination de l'activité bactéricide en présence d'une substance interférente selon NF T72-171 (méthode par filtration sur membranes):

### 1) Conditions expérimentales:

. température d'essai: 20°C ± 1°C
. diluant du produit: eau distillée stérile
. substance interférente: "conditions de saleté": albumine bovine 1%, eau dure à 30° français
Stabilité en présence du produit: absence de précipité pendant 2 heures.

### 2. Mode opératoire déterminé à la suite de l'essai préliminaire:

. nature des membranes et référence:
   SARTORIUS 13 906-47 ACN, porosité 0,45 um, blanches, quadrillées.
. liquide de rinçage:
   Nature: eau distillée additionnée de 0,5% (v/v) de tween 80
   Mode de préparation: autoclavage à 121°C pendant 25 minutes
   Nombre de lavages avec le diluant: 3
   Volume du diluant utilisé pour chaque lavage: 50 ml
. neutralisant(s) ajouté(s) au milieu de dénombrement et concentration(s): néant
. autres additions au milieu de dénombrement:
. 0,0025% (p/v) de chlorure de triphényl tétrazolium pour une meilleure visualisation des colonies
. pour Enterococcus hirae, gélose D. Coccosel (BIOMERIEUX 51251) à l'esculine, qui noircit en présence d'entérocoques.

### 3) Résultats des essais préliminaires dans les conditions décrites:

| Concentrations essayées du produit de l'invention | Souches, collection d'origine et numéro dans la collection | N | N' | n |
|---|---|---|---|---|
| 1% (v/v) | Pseudomonas aeruginosa CIP A22 | 149 | 117 | 127 |
| 1% (v/v) | Escherichia coli CIP 54 127 | 188 | 175 | 176 |
| 1% (v/v) | Staphylococcus aureus CIP 53 154 | 171 | 173 | 180 |
| 1% (v/v) | Enterococcus hirae CIP 5 833 | 108 | 104 | 101 |

### 4) Essai proprement dit:

Résultats expérimentaux:

| Souches,collection d'origine et numéro dans la collection | N | n | N' | X Concentration en pourcentage v/v au contact avec les microorganismes | | | | | pH | |
|---|---|---|---|---|---|---|---|---|---|---|
| | | | | 0,1 | 0,25 | 0,5 | 0,75 | 1 | Cmin | Cmax |
| Pseudomonas aeruginosa CIP A22 | 149 | 127 | 117 | + | + | 33 | 0 | 0 | 7,1 | 5,0 |
| Escherichia coli CIP 54 127 | 188 | 176 | 175 | + | 17 | 0 | 1 | 0 | 7,1 | 5,2 |
| Staphylococcus aureus CIP 53 154 | 171 | 180 | 173 | 0 | 0 | 0 | 0 | 0 | 7,0 | 5,1 |
| Enterococcus hirae CIP 5 855 | 108 | 101 | 104 | 0 | 0 | 0 | 0 | 0 | 7,2 | 5,1 |

| | | | | | | | | | | |
|---|---|---|---|---|---|---|---|---|---|---|
| + = plus de 150 colonies | | | | | | | | | | |

Sont bactéricides les concentrations pour lesquelles:

X est inférieur ou égal à N' si N, N' et n sont équivalents.

### Conclusion:

Le produit de l'invention présente à 20°C une activité bactéricide spectre 4 en conditions de saleté conforme à la norme NF T72-171.

### E) Détermination de l'activité bactéricide selon la norme NF T72-190:

Les conditions d'essai sont:
- références des membranes utilisées: Millipore HAWG porosité 0,47 um
- utilisation d'un vibreur ultra-sonique: non
- nature des porte-germes utilisés: verres de montre
- temps de séchage des porte-germes après dépôt de l'inoculum: 45 min.
- temps de contact produit-inoculum: 15 min
- quantité de désinfectant déposée sur chaque porte-germes: 0,2 ml
- eau de dilution du produit: eau dure à 30 degrés hydrotimétriques français.
- température ambiante pendant les essais: 20°C environ
- liquide de lavage des membranes: eau distillée addtionnée de 0,5% (v/v) de tween 80.
- nombre de lavages effectué: 3
- volume de liquide utilisé pour chaque lavage: 50 ml
- souches microbiennes utilisées:
   Pseudomonas aeruginosa CIP A22
   Escherichia coli CIP 54 127
   Staphylococcus aureus CIP 53 154
   Enterococcus faecium CIP 5855
- Validité des essais préliminaires (concentration d'essais = 0,6%): Pseudomonas aeruginosa CIP A22 n₁ = 156 N₁ = 169 Escherichia coli CIP 54 127 n₂ = 140 N₂ = 135 Staphylococcus aureus CIP 53 154 n₃ = 204 N₃ = 222 Enterococcus faecium CIP 5855 n₄ = 142 N₄ = 156 Essais prémiminaires validés (n > 0,5 N)
- taux de réduction: activité désinfectante d: Pseudomonas aeruginosa CIP A22
   dilution: 0,6% Temps de contact: 15 min. d₁ = 6,9 logs Escherichia coli CIP 54 127
   dilution: 0,6% Temps de contact: 15 min. d₂ = 7,6 logs Staphylococcus aureus CIP 53 154
   dilution: 0,6% Temps de contact: 15 min. d₃ = 6,3 logs Enterococcus faecium CIP 5855
   dilution: 0,6% Temps de contact: 15 min. d₄ = 5,1 logs

Le taux de réduction minimum sur les formes bactériennes végétatives (activité bactéricide) doit être supérieur ou égal à 5.

Le produit de l'invention à la dilution de 0,6% en 15 minutes de contact satisfait à la norme AFNOR NF T72-190 bactéricide spectre 4.

### F) Détermination de l'activité fongicide selon la norme AFNOR NF T72-201 (essai partiel avec Candida albicans) (méthode par filtration sur membranes):

### 1) Conditions expérimentales:

. température d'essai: 20°C ± 1°C
. diluant du produit: eau distillée stérile

### 2. Mode opératoire déterminé à la suite de l'essai préliminaire:

. référence et nature des membranes:
   SARTORIUS 13 906-47 ACN, nitrate de cellulose, porosité 0,45 um, blanches, quadrillées.
. liquide de rinçage:
   Nature: eau distillée additionnée de 0,5% (v/v) de tween 80
   Mode de préparation: autoclavage à 121°C pendant 25 minutes
   Nombre de lavages avec le diluant: 3
   Volume de diluant utilisé pour chaque lavage: 50 ml
. neutralisant(s) ajouté(s) au milieu de dénombrement et concentration(s): néant

### 3) Résultats des essais préliminaires dans les conditions décrites:

| Concentrations essayées du produit de l'invention | Souches, collection d'origine et numéro dans la collection | N | N' | n |
|---|---|---|---|---|
| 1% (v/v) | Candida albicans IP 1180-79 | 99 | 92 | 100 |

### 4) Essai proprement dit:

Résultats expérimentaux:

| Souches,collection d'origine et numéro dans la collection | N | n | N' | X Concentration en pourcentage v/v au contact avec les microorganismes | | | | | pH | |
|---|---|---|---|---|---|---|---|---|---|---|
| | | | | 0,1 | 0,25 | 0,5 | 0,75 | 1 | Cmin | Cmax |
| Candida albicans IP 1180-79 | 99 | 100 | 92 | 3 | 1 | 9 | 0 | 0 | 4,7 | 4,2 |
| + = plus de 200 colonies | | | | | | | | | | |

Sont fongicides les concentrations pour lesquelles:

n' est inférieur ou égal à N' si N, N' et n sont équivalents.

### Conclusion:

Le produit de l'invention est levuricide selon la norme NF T72-201.

### G) Détermination de la toxicité aigüe du produit de l'invention:

Le produit se présente sous forme d'un liquide de couleur jaune clair miscible à l'eau.

La détermination de la toxicité aigue a été pratiquée sur la Souris (Swiss) provenant du Centre d'Elevage DEPRE (18230 SAINT DOULCHARD).

L'étude a été conduite en maintenant les animaux dans des locaux à température stabilisée (20-22°C) recevant l'aliment complet U.A.R. réf. A04 (7 rue Galliéni à VILLEMOISSON sur ORGE) et disposant d'eau à volonté.

Les animaux ont été observés pendant les 6 premières heures qui ont suivi l'administration du produit, ainsi qu'au cours des 2 semaines suivantes. La mortalité a été notée au cours de cette période et sur les survivants ont été mesurés la courbe du poids et la consommation de nourriture et de boisson.

### Détermination de la dose létale 50 après administration par voie orale:

Un essai préliminaire a été pratiqué sur 18 souris pour appréhender les posologies susceptibles de donner des indications pour la conduite de cette étude.

### Nombre d'animaux

56 souris mâles Swiss, poids moyen initial de 20 g.

### Doses utilisées

Les doses sont exprimées en millilitres de produit par kilogramme. Le produit a été administré par gavage per os à l'aide d'une sonde aux doses suivantes, après dilution appropriée dans l'eau distillée.

| | |
|---|---|
| 4500 ml/kg ) | |
| 3750 ml/kg ) | |
| 3000 ml/kg ) | sous un volume de 0,1 ml pour 10 g |
| 2500 ml/kg ) | |
| 2000 ml/kg ) | |

### Lots d'animaux:

| Dose | Nombre d'animaux |
|---|---|
| 4500 ml/kg | 13 |
| 3750 ml/kg | 10 |
| 3000 ml/kg | 13 |
| 2500 ml/kg | 10 |
| 2000 ml/kg | 10 |

### Mortalité:

La mortalité pour la dose de 4500 ml/kg apparaît dès la 3ème heure suivant le gavage et se poursuit jusqu'au 2ème jour, passé ce délai la mortalité est de 100%.

Pour les doses plus faibles, la mortalité apparaît également dès la 3ème heure et se poursuit jusqu'au 4ème jour.

### Résultats:

Le calcul de la DL 50 a été établi selon la:
- méthode LITCHFIELD et WILCOXON

La dose Létale 50 est comprise entre 2540 ml/kg et 3420 ml/kg.
- méthode de MILLER et TAINTER

La dose Létale 50 est comprise entre 2765 ml/kg et 3135 ml/kg.

### Observations des animaux:

Environ 30 minutes après le gavage et pour les plus fortes doses les animaux présentent une ptose des paupières, un poil hirsute, une diminution de la mobilité.

Par ailleurs, vers la 5ème heure apparaît une cyanose très prononcée.

A partir des 3ème-4ème jours les animaux récupèrent leur comportement normal ainsi qu'un niveau de consommation de nourriture et de boisson équivalent à leur état antérieur.

### Conclusion:

La dose Létale 50 du produit de l'invention administrée à la souris mâle par voie orale indique que ce produit à une toxicité relativement faible par cette voie.

Le produit de l'invention convient particulièrement bien pour être appliqué sur du matériel médico-chirurgical comme des sondes, des cathéters, des matériels d'endoscopie. Il permet de nettoyer et de décontaminer toutes sortes de matériaux comme du polychlorure de vinyle, des silicones, des caoutchoucs, des métaux, diverses matières plastiques et céramiques. L'agent nettoyant-décontaminant de cette invention n'altère en aucune façon les matériaux sur lesquels il est appliqué et il présente une très bonne tolérance cutanée. Il n'y a pas de toxicité par inhalation contrairement aux produits utilisés jusqu'à présent.

Le produit de l'invention a été utilisé pour la détermination de l'indice d'irritation cutanée primaire chez le lapin.

L'étude a été réalisée sur 6 lapins mâles, albinos de race Néo-Zélandaise de poids supérieur à 2,5 kg. Les animaux étaient placés individuellement dans des cages d'une batterie de 3 cages doubles à nettoyage papier (batterie P en polystèrène choc fournie par IFFA-CREDO, les Oncins B.P. 109, 69210 L'ARBRESLE).

Ces batteries étaient disposées dans une animalerie à température contrôlée (18 ± 2°C) et les lapins recevaient une alimentation standard, référence 112, fournie par U.A.R. (7 rue Galiéni à Villemoisson sur Orge -91360 EPINAY SUR ORGE) et avaient de l'eau à volonté.

### Dose administrée

La quantité de produit appliquée sur la peau rasée a été de 0,5 millilitre sur chaque flanc rasé.

### Mode opératoire

Les animaux étaient accoutumés à l'animalerie dans laquelle ils séjournaient depuis plus d'un mois.

La tonte des poils a été réalisée à l'aide d'une tondeuse électrique sur le flanc droit et sur le flanc gauche délimitant une surface d'environ 100 cm² (14 x 7 cm) sur chaque flanc. La tonte a été réalisée 48 heures avant l'application.

Sur l'un des flancs rasés (côté droit) trois incisions au vaccinostyle ont été effectuées sur chaque lapin. Il s'agit d'incisions parallèles de 3 cm de long environ et espacées de 0,5 cm. L'incision est pratiquée de telle manière que l'épiderme soit attaqué sans atteindre le derme et de toute façon sans provoquer de saignement.

Le produit a été étalé sur 2 compresses de gaze hydrophile (PETRA compresses HARTMAN 7,5 x 5 cm) à raison de 0,5 ml (liquide mesuré à la seringue) étalé sur une surface de 2,5 x 2,5 cm. Chaque carré de gaze ainsi préparé est appliqué sur le flanc incisé (Cl) et sur le flanc non incisé (CNl) de l'animal. La gaze a été maintenue en place à l'aide de 3 bandes de fixation (TRANSPORE 3 M microperforé) en long et en travers.

Un filet extensible a été mis en place sur tout le corps du lapin pour protéger les carrés de gaze.

La gaze a été enlevée 24 heures après l'application et l'indice d'irritation primaire évalué 30 minutes après l'enlèvement des compresses et de nouveau 48 heures plus tard (soit 24 et 72 heures après l'application du produit à tester).

### Contrôles effectués

L'évaluation de l'irritation primaire a été effectuée 24 heures puis 72 heures après l'application en s'appuyant sur l'appréciation de:
- l'apparition d'érythème [(E)] et la formation d'escarres selon la cotation suivante:
   . pas d'érythème 0
   . léger érythème (à peine visible) 1
   . érythème bien visible 2
   . érythème modéré à important 3
   . érythème grave avec formation de légers escarres 5
- la formation d'oedème (o)
   . pas d'oedème 0
   . très léger oedème (à peine visible) 1
   . léger oedème (contours bien définis, gonflement apparent) 2
   . oedème moyen (épaisseur 1 mm environ) 3
   . oedème grave (épaisseur supérieure à 1 mm) 4

### Notation

Les notes obtenues pour l'érythème et l'oedème après 24 et 72 heures sur les six zones correspondant aux surfaces incisées et non incisées sont additionnées.

La note moyenne est obtenue en divisant le total précédent par 24. Cette moyenne (toujours inférieure à 8) est désignée comme étant l'indice d'irritation primaire cutanée.

La substance est considérée comme:
- non irritante pour un indice inférieur à 0,5
- légèrement irritante pour un indice compris entre 0,5 et 2
- irritante pour un indice compris entre 2 et 5
- sévèrement irritante pour un indice compris entre 5 et 8.

### Résultats

Le tableau ci-après montre qu'une réaction érythémateuse discrète a été observée sur la moitié seulement des lapins n° 8, 9 et 12; elle est apparue soit dès 24 heures pour le n° 8 et 11, soit seulement 72 heures après pour le n°12.

Il n'y a pas eu développement d'oedème ni d'autre réaction cutanée.

### Conclusion

L'application unique de ce produit peut être considérée d'après l'indice calculé comme non irritant chez le lapin.

Le produit de l'invention a été aussi utilisé pour la détermination de l'indice d'irritation oculaire chez le lapin.

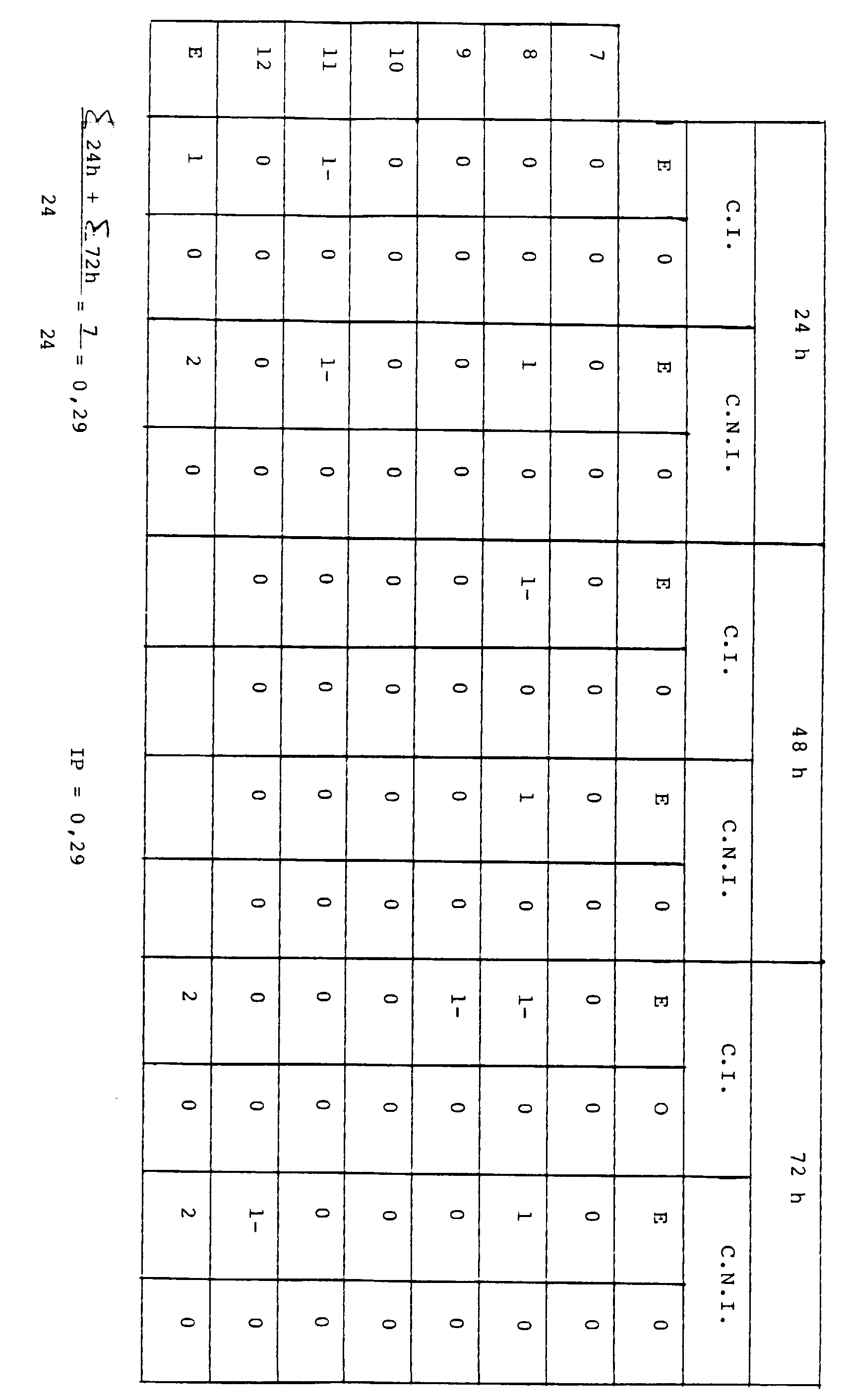

L'étude a été réalisée sur 6 lapins mâles, albinos de race Néo-Zélandaise pesant en moyenne en début d'étude environ 4 kg. Les animaux étaient placés individuellement dans des cages d'une batterie de 3 cages double à nettoyage papier (batterie P en polystèrène choc fournie par IFFA-CREDO, les Oncins B.P. 109, 69210 L'ARBRESLE).

Ces batteries étaient disposées dans une animalerie à température contrôlée (18 ± 2°C) et les lapins recevaient une alimentation standard, référence 112, fournie par U.A.R. (7 rue Galiéni à Villemoisson sur Orge - 91360 EPINAY SUR ORGE) et avaient de l'eau à volonté.

### Mode opératoire et dose administrée

L'application d'une dose unique, 0,1 ml du produit à tester, est pratiquée sur l'un des deux yeux du lapin, l'autre servant de témoin. Les yeux de chaque lapin ont été examinés avant l'étude.

Les animaux sont placés dans une boîte à contention; et le produit est instillé dans le cul de sac conjonctival de l'oeil droit de l'animal après avoir écarté la paupière inférieure du globe oculaire. On maintient ensuite les paupières fermées pendant quelques secondes pour éviter l'écoulement du produit.

L'oeil gauche ne subit aucun traitement et sert de témoin.

Les yeux sont ensuite examinés: 1h, 24h, 48h et 72h après l'instillation, à l'aide d'un ophtalmoscope avant et après l'application de fluorescéine.

### Résultats

Les tableaux I à IV récapitulant, pour chaque lapin n° 7, 8, 9, 10, 11 et 12, la notation des effets observés, permettent de dire:
qu'une très discrète réaction conjonctivale a été observée 1 heure après l'application pour le lapin n° 8.
24 heures et 48 heures après une rougeur modérée pour les lapins n° 7 et 8.
Par contre après 72 heures il n'y a plus aucune réaction.

### Conclusion

On peut donc estimer que ce produit chez le lapin est très bien toléré sur le plan oculaire.

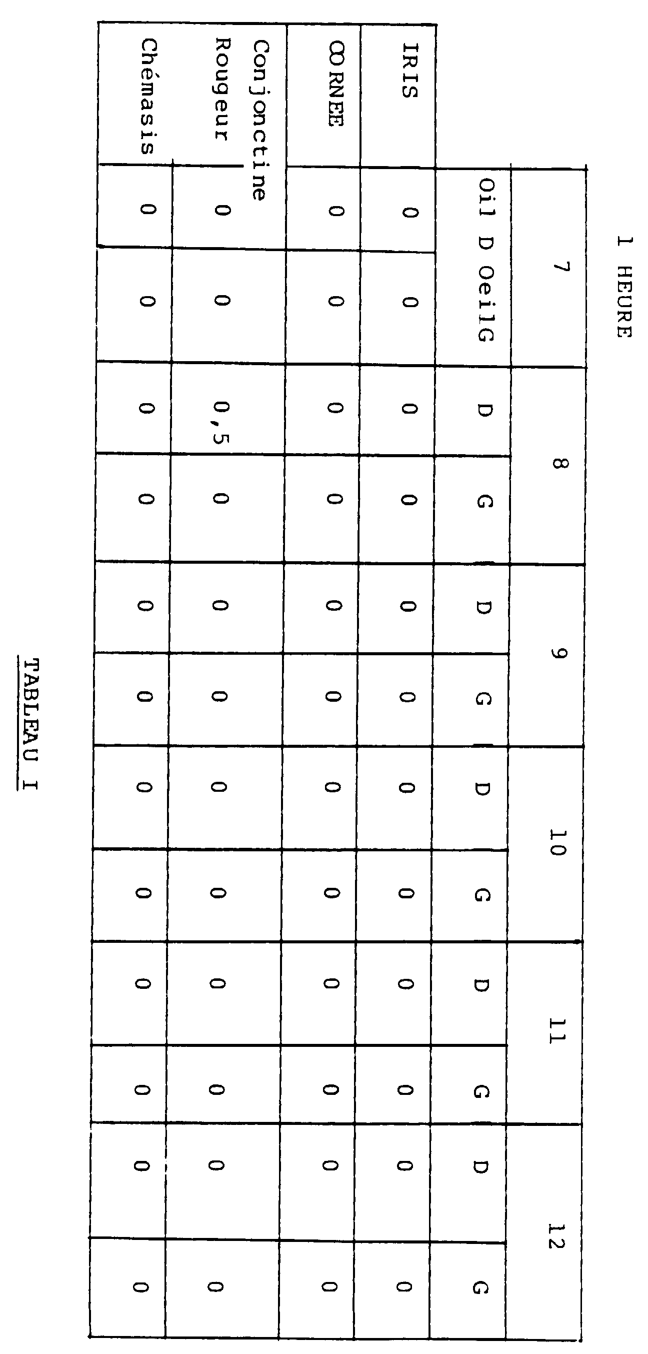

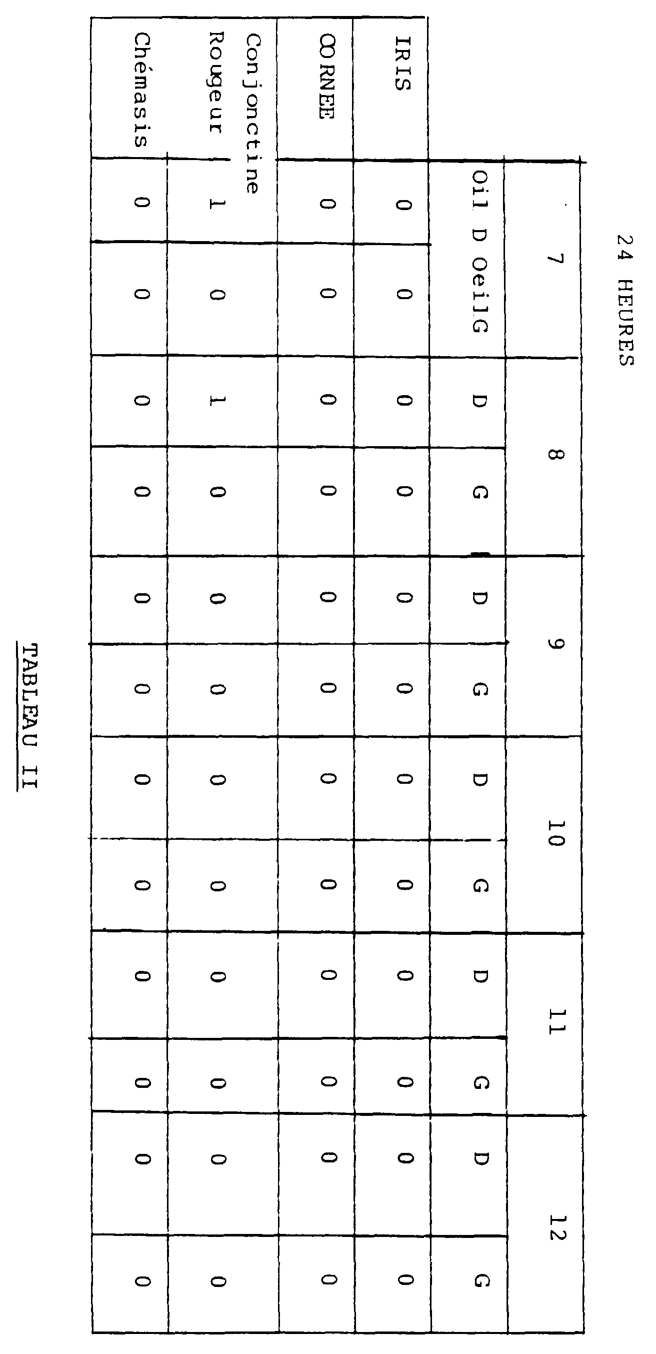

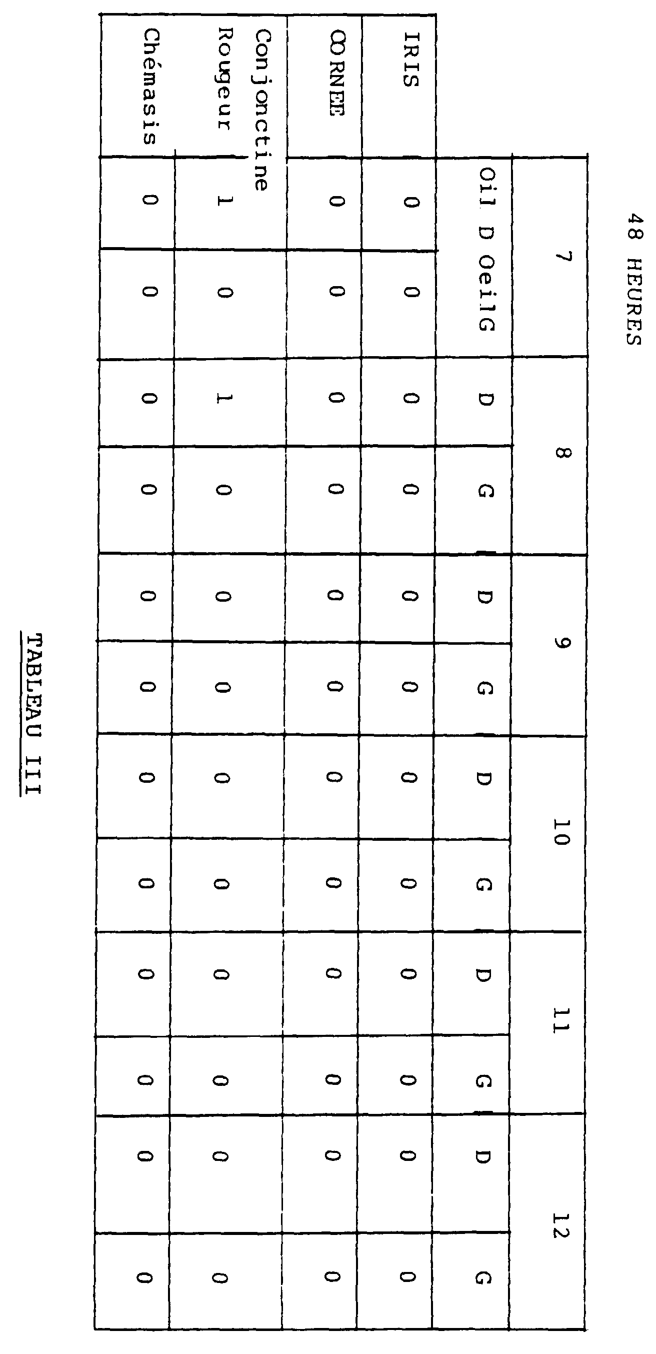

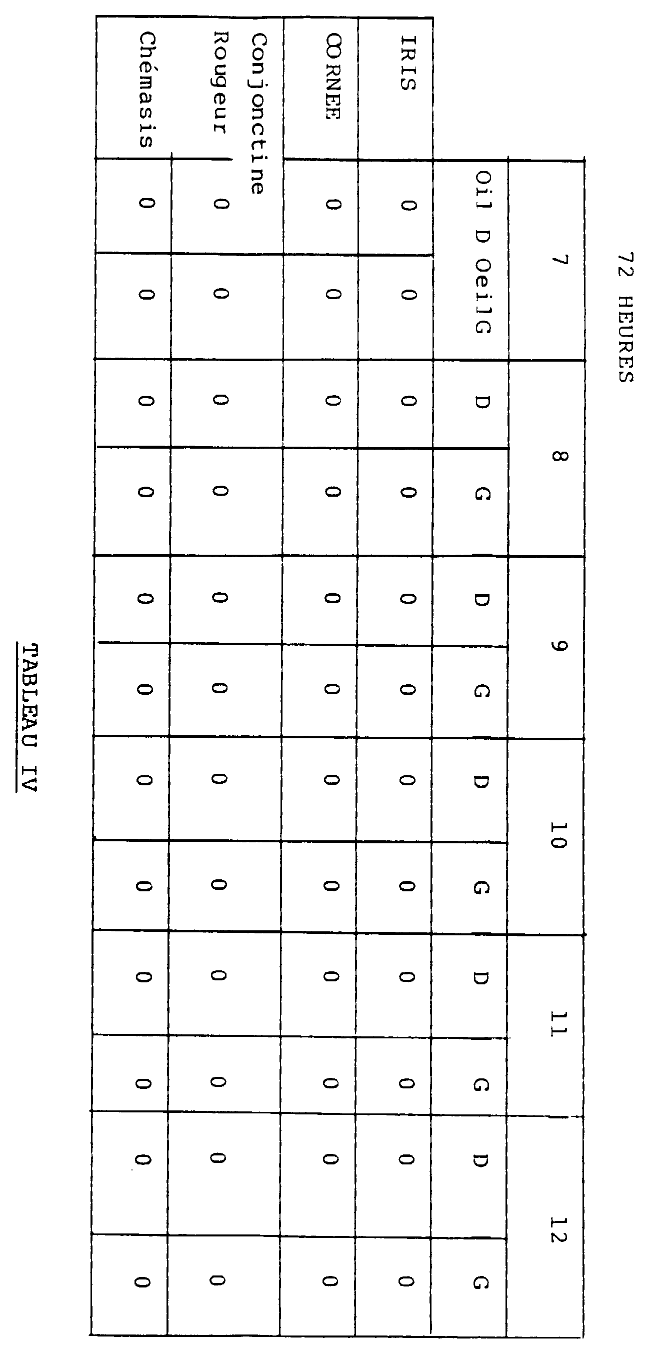

On indique aussi ci-après les compatibilités du produit de l'invention avec l'eau dure, les métaux, les composites et les ciments optiques

### 1) Avec l'eau dure

La dureté de l'eau ordinaire n'a aucune influence sur l'activité du produit de l'invention, ceci a été mis en évidence par la norme AFNOR NFT 72171 en présence d'eau dure.

### 2) Avec les métaux

Le produit de l'invention n'a aucune action corrosive sur les aciers inoxydables. Des essais avec des solutions de 5% du produit de l'invention ont montré une parfaite compatibilité avec des instruments en acier inox immergés pendant plus de 90 jours à une température de 45°C. La concentration d'utilisation est de 0,6 à 1%.

### 3) Avec les composites

Le produit de l'invention n'attaque pas les matériaux comme le caoutchouc, le latex, le P.V.C., le polyéthylène, le polyuréthane et le silicone. Après une immersion de 90 jours dans une solution du produit de l'invention à 5%, aucune modification de flexibilité, élasticité, souplesse, assemblage des pièces n'a été notée.

### 4) Avec les ciments optiques

Les différents tests effectués sur des endoscopes rigides et flexibles avec des solutions du produit de l'invention à 5% montrent une parfaite compatibilité avec ce matériel fragile.

La concentration préconisée est de 0,6 à 1%. Dans des conditions normales d'utilisation, le produit de l'invention n'entraîne aucune altération des endoscopes.

On décrit ci-après l'étude réalisée concernant l'efficacité du produit de l'invention sur le pouvoir infectieux du virus HIV₁ (agent étiologique du S.I.D.A.).

### I - INTRODUCTION

Le but de l'étude est de déterminer la concentration et le temps d'action nécessaire à un désinfectant pour inactiver au moins 10⁵ particules infectieuses de virus HIV₁.

Deux tests sont utilisés:
- action du désinfectant sur l'enzyme du virus HIV₁
- étude du pouvoir infectieux résiduel pour la lignée de lymphocytes T humains MOLT₄.

### II - MATERIEL

a) produit à étudier: il s'agit d'un désinfectant liquide
b) le virus HIV₁: le virus (souche (HTLV_{III}B) est issu d'un surnageant de culture cellulaire MOLT₄ infectée entretenue au laboratoire.

Le titre du surnageant est évalué par dosage del'activité transcriptase inverse (ATI) et par mesure de l'infectivité pour la lignée continue utilisée dans le test (MOLT₄)

Virus expérimental d'ATI: 1,5 x 10⁶ XPM équivalents/ml
de titre infectieux: 10⁻⁶ après 2 semaines de culture
c) la lignée de cellules T humaines (MOLT₄) utilisée dans le test lors de l'infection par le virus HIV, cette lignée permet d'observer un effet cytopathogène (ECP). Cet effet cytopathogène est directement corrélé à la quantité de virus utilisé pour l'infection, à sa réplication et à l'expression des antigènes viraux par les cellules.

Toute inhibition de cet effet cytopathogène correspond à une inhibition de la multiplication du virus HIV₁.

Nous exprimerons dans un tableau la date d'apparition d'un ECP dans les cultures de la façon suivante:
- ++++: ECP maximum (70%) mort cellulaire
- +++: ECP 50%
- ++: ECP 20%
- +: ECP 5 à 10%
- 0: ECP non décelé

### III - METHODES

### 1) Traitement du virus HIV₁ par le désinfectant étudié

Nous utilisons le surnageant viral précédemment cité. Pour chacune des dilutions du désinfectant et aux temps d'incubation préconisés, 2 tubes de 1 ml de surnageant viral expérimental sont utilisés.
a) le désinfectant est dilué dans le surnageant viral et l'incubation a lieu à la température du laboratoire
b) les tubes sont ultracentrifugés de façon à concentrer le virus résiduel.

Nous procédons de la même façon pour les témoins non traités.

Chaque culot viral est repris dans un tampon Tris-EDTA, divisé en deux parties égales.
- la première partie après addition du TRITON (x 100) (0,1%) sert au dosage de l'activité transcriptase inverse résiduelle.
- la deuxième partie, après 2 lavages en RPMI et filtration (MILLIPORE 0,45 um), est incubée en présence de cellules MOLT₄ sensibles pendant lh30 à 37°C.

Ces cellules sont mises en culture dans un milieu RPMI contenant 10% de sérum de veau foetal, 1% de glutamine et 1% d'antibiotiques.

Les cultures sont maintenues par passage pendant 2 semaines après l'apparition d'un ECP caractéristique dans le groupe Témoin virus non traité soit environ 4 semaines au total.

En fin de culture, un lysat cellulaire est effectué par addition de TRITON (x 100) à 0,1% final et la présence de virus intracellulaire non détecté par la lecture de l'ECP est mise en évidence par un dosage enzymatique de la P24 spécifique du virus HIV₁.

Nous utilisons le kit commercialisé par la société ABBOTT qui permet la détection de 50 picogrammes/ml de P 24.

Selon cette expérimentation, nous déterminons les conditions d'efficacité d' un désinfectant pour inactiver au moins 10⁵ unités infectieuses de virus HIV₁.

### 2) Mesure de l'activité Transcriptase inverse

L'activité transcriptase inverse est dosée à partir d'un millilitre de surnageant viral expérimental traité ou non par le désinfectant, après concentration par ultracentrifugation 5' à 100 00 rpm. Chaque culot viral est resuspendu dans 20µl de tampon NTE. 10ul sert au dosage de l'ATI après addition de 0,1% de TRITON (x100).

L'activité enzymatique est révélée par l'addition du 40ul de mélange réactionnel suivant:
Tris 50 m M pH 7,9
Kcl 20 mM
Mg Cl₂ 5 m M
Dithiotreithol 1 mM
poly rA 0, 05 0D/ml
oligo dT 12-18 0,05 OD/ml
3_{H} TTP 5µCi

Après une incubation de 1 heure à 37°C les produits acido-insolubles sont précipités par de l'acide trichloracétique à 20%, filtrés sur membranes de mitrocellulose 0,45µm et la radioactivité β est mesurée à l'aide d'un compteur à scintillation KONTRON.

**Tableau V**

| CONDITIONS DE TRAITEMENT DE LA SOLUTION VIRALE | | | |
|---|---|---|---|
| Echantillons | Produit | Dilution | Temps d'incubation |
| A1 | Ampholysine | 5% | 10 minutes |
| A2 | | | 30 minutes |
| A3 | | | 60 minutes |
| | | | |
| A4 | Ampholysine | 2% | 10 minutes |
| A5 | | | 30 minutes |
| A6 | | | 60 minutes |
| | | | |
| A7 | Ampholysine | 1% | 10 minutes |
| A8 | | | 30 minutes |
| A9 | | | 60 minutes |
| | | | |
| A10 | Ampholysine | 0,6% | 10 minutes |
| A11 | | | 30 minutes |
| A12 | | | 60 minutes |
| B non traité | RPMI 1640 | | 60 minutes |
| C Témoin cellules | | | |

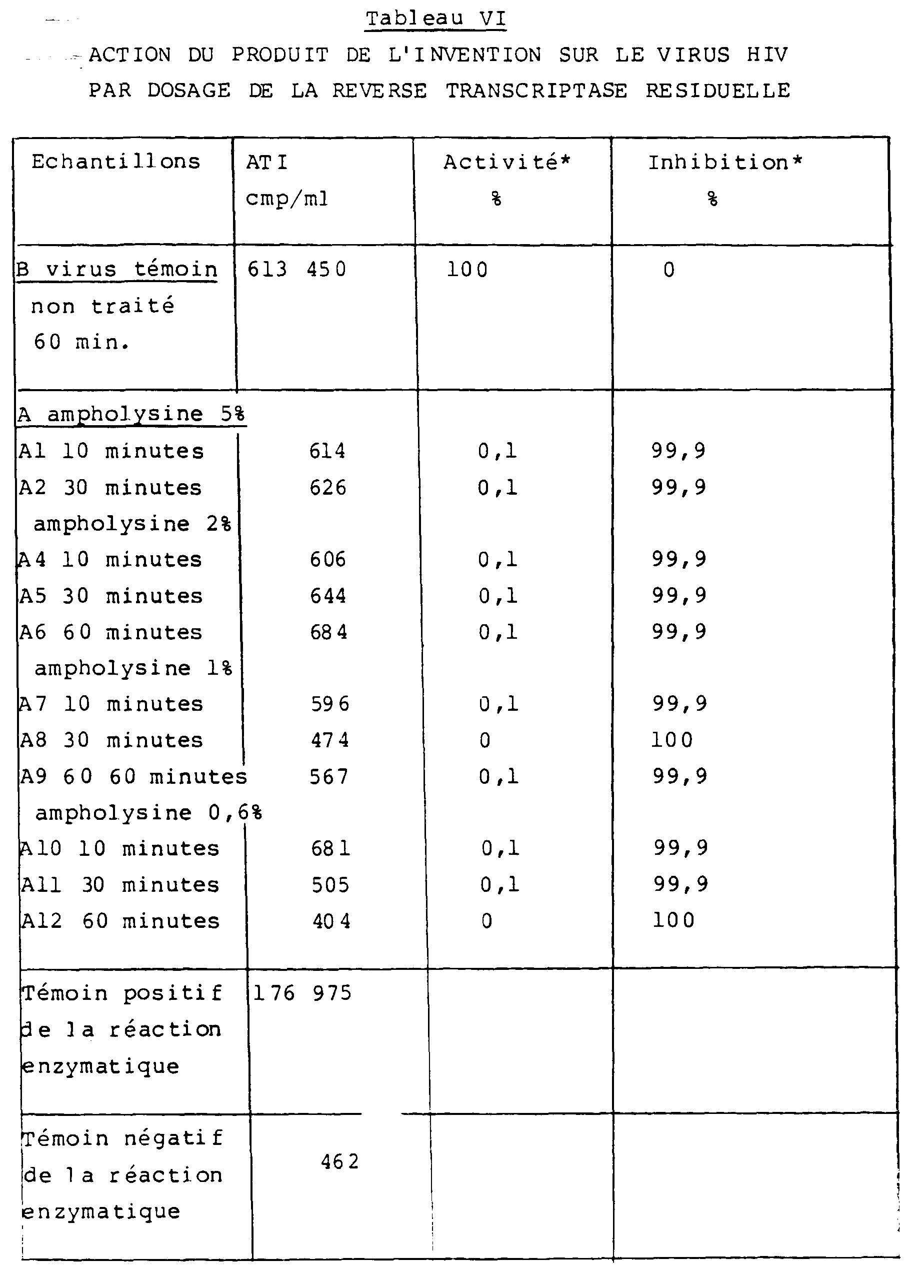

Les pourcentages d'activité et d'inhibition de la reverse transcriptase de chaque échantillon traité sont calculés par rapport au témoin virus non traité B.

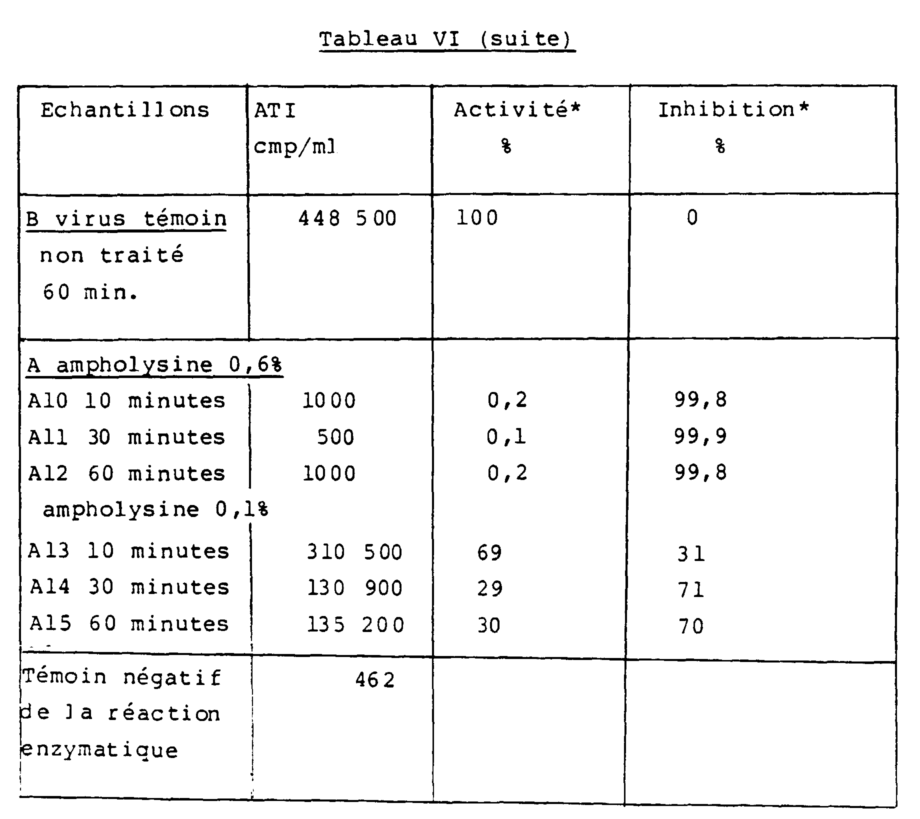

**Tableau VII**

| ETUDE DU POUVOIR INFECTIEUX RESIDUEL DE CHAQUE ECHANTILLON PAR CULTURE SUR CELLULES MOLT₄ | | | | | | | |
|---|---|---|---|---|---|---|---|
| Evaluation de l'effet cytopathogène viral (microscopie) | | | | | | | |
| Echantillons | J+4 | J+8 | J+12 | J+16 | J+20 | J+23 | P24 en pg/ml lyse terminale |
| Témoin Cellules C | 0 | 0 | 0 | 0 | 0 | 0 | 0 |
| Témoins virus non traités | | | | | | | |
| B | 0 | ++ | +++ | ++++ | | | > 1000 |
| B | 0 | + | ++ | +++ | | | > 1000 |
| Virus traité par le produit de l'invention | | | | | | | |
| A7 | 0 | 0 | 0 | 0 | 0 | 0 | négatif |
| A8 | 0 | 0 | 0 | 0 | 0 | 0 | négatif |
| A9 | 0 | 0 | 0 | 0 | 0 | 0 | négatif |
| | | | | | | | |
| A10 | 0 | 0 | 0 | 0 | 0 | 0 | négatif |
| A11 | 0 | 0 | 0 | 0 | 0 | 0 | négatif |
| A12 | 0 | 0 | 0 | 0 | 0 | 0 | négatif |
| | | | | | | | |
| A13 | 0 | 0 | 0 | 0 | 0 | 0 | négatif |
| A14 | 0 | 0 | 0 | 0 | 0 | 0 | négatif |
| A15 | 0 | 0 | 0 | 0 | 0 | 0 | négatif |

**Tableau VIII**

| ETUDE DU POUVOIR INFECTIEUX RESIDUEL DU SURNAGEANT VIRAL EXPERIMENTAL | | | | | |
|---|---|---|---|---|---|
| Evaluation de l'effet cytopathogène viral sur culture de MOLT₄ par microscopie | | | | | Lyse terminale dosage enzymatique de P24 en pg/ml |
| Echantillons | J+3 | J+7 | J+10 | J+14 | |
| Témoin Cellules non infectées | 0 | 0 | 0 | 0 | 2,05 |
| Virus expérimental dilué | | | | | |
| 10⁻¹ | ++ | ++++ | ++++ | ++++ | ND |
| | | | nécrosé | nécrosé | |
| 10⁻² | + | +++ | ++++ | ++++ | ND |
| | | | | nécrosé | |
| 10⁻³ | + | +++ | ++++ | ++++ | ND |
| | | | | nécrosé | |
| 10⁻⁴ | 0 | ++ | +++ | ++++ | >1000 |
| 10⁻⁵ | 0 | + | +++ | ++++ | >1000 |
| 10⁻⁶ | 0 | 0 | + | +++ | >1000 |
| 10⁻⁷ | 0 | 0 | + | +++ | >1000 |
| 10⁻⁸ | 0 | 0 | 0 | 0 | 834,93 |

### CONCLUSION

Le produit de l'invention est actif à 0,6% après un temps de contact de 10 minutes sur HIV₁ par étude sur l'activité de la reverse transcriptase inverse et par étude sur le pouvoir infectieux résiduel sur une lignée de lymphocytes T humains MOLT₄.

On décrit aussi ci-après l'évaluation de l'effet du produit de l'invention sur le virus de l'hépatite B.

Adaptée de la technique de Frösner, Jentsch and Uthemann: Zbl. Bakt. Hyg., I ABt. Orig. B 176; 1, 1982). La technique utilisée teste l'inhibition de l'HBsAg par le désinfectant, dans une réaction antigène-anticorps.

Le désinfectant est dilué à 0,05% 0,1% 0,6% 1% 2% dans de l'eau distillée.

L'efficacité de ce désinfectant contre le virus de l'hépatite B est testée à la température ambiante.

Les temps de contact sont: 10,30 et 60 minutes.

### Méthode utilisée pour tester l'inactivation du virus

L'évaluation est faite à température ambiante.

### Réaction

1 volume sérum positif HBsAg (prédilué au 1/100 dans PBS)
1 volume eau distillée
et 8 volumes de la concentration du désinfectant testé x 1,25.
Incubation 10, 30 et 60 minutes.

### Arrêt de la réaction

Chaque mélange est dilué au 1/100 dans du PBS contenant 10% SVF
La quantité d'HBsAg restante est testée avec le Kit:
Technique en Radioimmunoassy (Ausria II - 125 Diagnostic Kit) Antibody to Hépatitis B surface Antigen 125 I (Humain)
Une valeur moyenne est calculée à partir de 2 essais (cpm 125 I anti-HBs). L'Ag résiduel couplé à l'anticorps est révélé par le marqueur radioactif.

### Témoins: I 125

Le 100% du couplage est calculé en faisant:

4 témoins positifs avec 1 volume sérum positif HBsAg + 1 volume eau distillée

Chaque témoin est additionné de 8 volumes d'eau distillée et dilués au 1/100 dans PBS (10% SVF).

Le 0% du couplage correspond à la moyenne de 7 témoins négatifs ppour lesquels chaque concentration du désinfectant à tester est diluée au 1/100 dans du PBS additionné de 10% SVF. Un nombre de cpm (x) est ainsi déterminé, très proche du témoin négatif du kit. Toute valeur inférieure à 2,1 x (cut off) correspond à une inactivation totale de l'HBsAg. Le chiffre figurant dans les tableaux est donné après calcul du cut off.

| Concentration 1% | | | |
|---|---|---|---|
| | 1 part ED | 1 part 2% ALB | 1 part SVF |
| Antigène sans désinfectant | 2888 | 3282 | 2799 |
| 10' | 125 | 115 | 102 |
| 30' | 113 | 86 | 109 |
| 60' | 94 | 101 | 92 |
| Désinfectant sans antigène | | 207 | |

| Concentration 0,6% | | | |
|---|---|---|---|
| | 1 part ED | 1 part 2% ALB | 1 part SVF |
| Antigène sans désinfectant | 2333 | 2986 | 2798 |
| 10' | 101 | 125 | 101 |
| 30' | 88 | 70 | 94 |
| 60' | 82 | 96 | 89 |
| Désinfectant sans antigène | | 213 | |

| Concentration 0,1% | | | |
|---|---|---|---|
| | 1 part ED | 1 part 2% ALB | 1 part SVF |
| Antigène sans désinfectant | 3700 | 4103 | 3745 |
| 10' | 361 | 1509 | 2667 |
| 30' | 278 | 809 | 2017 |
| 60' | 240 | 747 | 2226 |
| Désinfectant sans antigène | | 252 | |

| Concentration 0,05% | | | |
|---|---|---|---|
| | 1 part ED | 1 part 2% ALB | 1 part SVF |
| Antigène sans désinfectant | 3743 | 3789 | 3404 |
| 10' | 280 | 923 | 2042 |
| 30' | 220 | 555 | 1426 |
| 60' | 153 | 372 | 1634 |
| Désinfectant sans antigène | | 234 | |

### CONCLUSION

Le produit de l'invention est actif sur le virus de l'hépatite B à la concentration 0,6% après 10 minutes de contact.

## Revendications

1. Composition d'agent nettoyant-décontaminant notamment pour instruments chirurgicaux caractérisée en ce qu'elle renferme
(a) un composé amphotère sur lequel est greffé au moins un groupe ammonium quaternaire,
(b) un composé cationique ammonium quaternaire ayant un effet bactéricide, et
(c) un alcool éthoxylé biodégradable non ionique détergent, et
en ce que le rapport pondéral de b) : a) est de 1 à 6 et préférentiellement de 2.

2. Composition selon la revendication 1, caractérisée en ce que le composé a) représente de 5 à 30 %, de préférence, de 5 à 15 % du poids total de la composition.

3. composition selon l'une quelconque des revendications 1 et 2, caractérisée en ce qu'elle comporte aussi
d) au moins un mélange d'alcools en C₁ à C₈.

4. Composition selon l'une quelconque des revendications 1 à 3, caractérisée en ce qu'elle comprend en outre
e) un composé détergent amphotère ayant une bonne tolérance cutanée, différent du composé a).

5. Composition selon l'une quelconque des revendications 1 à 4, caractérisée en qu'elle renferme également
f) un chélate.

6. Composition selon l'une quelconque des revendications 1 à 5, caractérisée en ce qu'elle comporte de plus
g) un agent modificateur de contrôle du pH.

7. Composition selon l'une quelconque des revendications 1 à 6, caractérisée en ce qu'elle comprend en outre:
h) un inhibiteur de corrosion et
i) un surgraissant destiné à assurer la stabilité de la mousse du produit.

8. Composition selon la revendication 7, caractérisée en ce que:
- le composé c) est utilisé à raison de 3 à 20%, de préférence de 5 à 15% du poids total de la composition,
- le composé d) est utilisé à raison de 3 à 20%, de préférence, de 5 à 15% du poids total de la composition,
- le composé e) est utilisé à raison de 1 à 15%, de préférence de 2 à 5% du poids total de la composition,
- le composé f) est utilisé à raison de 1 à 7% de préférence de 2 à 4% du poids total de la composition,
- le composé h) est utilisé à raison de 1 à 5% de préférence 2% du poids total de la composition,
- le composé i) est utilisé à raison de 1 à 5% de préférence 1% du poids total de la composition.

9. Composition selon l'une quelconque des revendications 1 à 8, caractérisée en ce que le composé a) répond à la formule générale: 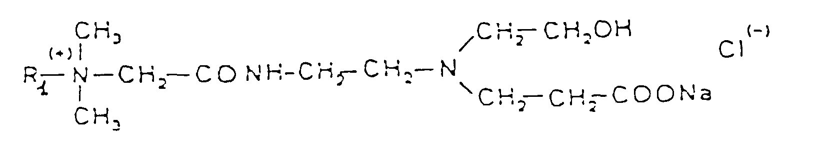 dans laquelle R₁ représente une chaîne d'acide gras saturé ou non saturé.

10. Composition selon la revendication 9, caractérisée en ce que le composé a) est la N|N'(N"-2-hydroxyéthyl-N"-carboxyéthylaminoéthyl) amidoacétate|-N,N-diméthyl-N-coco-ammoniumbétaine.

11. Composition selon l'une quelconque des revendications 1 à 10, caractérisée en ce que le composé b) répond à la formule générale: 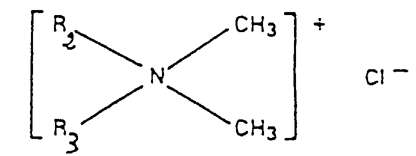 dans laquelle R₂ et R₃ sont des groupes alkyles en C₁ à C₁₅.

12. Composition selon la revendication 11, caractérisée en ce que le composé b) est le chlorure de didécyl-diméthyl-ammonium.

13. Composition selon l'une quelconque des revendications 1 à 12, caractérisée en ce que l'alcool éthoxylé biodégradable non-ionique détergent est un agent de surface non-ionique à base d'un alcool oxo saturé de formule:
R₄O(CH₂CH₂O)ₓH
où R₄ est i-C₁₃H₂₇ et x = 3, 5, 7, 8 ou 12.

14. Composition selon la revendication 13, caractérisée en ce que l'alcool éthoxylé biodégradable non-ionique détergent répond à la formule:
i-C₁₃H₂₇O(CH₂CH₂O)₈H;

15. Composition selon l'une quelconque des revendications 3 à 14, caractérisée en ce que l'alcanol inférieur est un mélange d'alcools en C₁ à C₈.

16. Composition selon la revendication 15, caractérisée en ce que le mélange d'alcools est constitué d'éthanol et d'isopropanol.

17. Composition selon l'une quelconque des revendications 4 à 16 caractérisée en ce que le composé e) répond à la formule générale 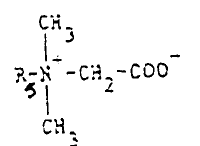 dans laquelle R₅ représente un reste d'acide gras saturé ou non saturé.

18. Composition selon la revendication 17, caractérisée en ce que le composé e) est la lauryldiméthylcarboxyméthylammonium bétaine.

19. Composition selon l'une quelconque des revendications 5 à 18, caractérisée en ce que le composé f) est l'acide éthylène-diamine-tétra-acétique de formule:

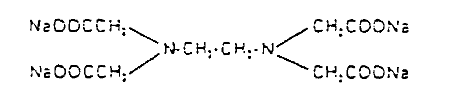

20. Composition selon l'une quelconque des revendications 6 à 19, caractérisée en ce que le composé g) est l'acide citrique.

21. Composition selon l'une quelconque des revendications 7 à 20, caractérisée en ce que le composé h) répond à la formule générale: 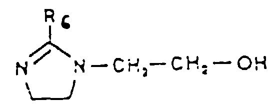 dans laquelle R₆ est un radical alkyle en C₁₀ à C₂₀.

22. Composition selon l'une des revendications 7 à 20, caractérisée en ce que le composé h) est la 1-hydroxyéthyl-2-heptadécénylimidazoline.

23. Composition selon l'une quelconque des revendications 7 à 22, caractérisée en ce que le composé i) répond à la formule générale: 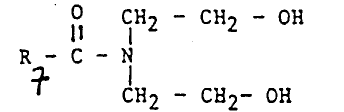 dans laquelle R₇ est un reste d'acide gras saturé ou non saturé.

24. Composition selon la revendication 23, caractérisée en ce que le composé i) est le diéthanolamide d'acide oléique.

25. Composition selon l'une quelconque des revendications 1 à 24, caractérisée en ce qu'elle renferme:
- N|N'(N"-2-hydroxyéthyl-N"-carboxyéthylaminoéthyl) amidoacétate|-N,N-diméthyl-N-coco-ammoniumbétaine 7%
- chlorure de didécyl diméthyl ammonium 13%
- isotridécanol éthoxylé à 8 moles d'oxyde d'éthylène 7%
- éthanol-isopropanol 12%
- lauryldiméthylcarboxyméthylammonium bétaine 3%
- acide éthylène diaminetétraacétique 3%
- 1-hydroxy-éthyl-2-heptadécényl-imidazoline 1%
- diéthanolamide d'acide oléique 1%
- acide citrique quantité suffisante pour obtenir un pH de 8,5 ± 0,5

## Claims

1. Cleaning-decontaminating agent composition for surgical instruments in particular, characterized in that it contains :
(a) an amphoteric compound on which at least one quaternary ammonium group is grafted ;
(b) a quaternary ammonium cationic compound having a bactericidal effect, and
(c) a detergent nonionic biodegradable ethoxylated alcohol,
and characterized in that the weight ratio of b) : a) is from 1 to 6 and is preferably 2.

2. Composition according to claim 1, characterized in that the a) compound represents 5 to 30%, preferably 5 to 15% of the total weight of the composition.

3. Composition according to one of the claims 1 and 2, characterized in that it also comprises :
d) at least a mixture of C₁ to C₈ alcohols.

4. Composition according to one of the claims 1 to 3, characterized in that it comprises in addition :
(e) an amphoteric detergent compound having a good skin tolerance, different from a) compound.

5. Composition according to one of the claims 1 to 4, characterized in that it also contains :
(f) a chelate.

6. Composition according to one of the claims 1 to 5, characterized in that it furthermore comprises :
(g) a modifying agent for controlling the pH.

7. Composition according to one of the claims 1 to 6, characterized in that it comprises in addition :
(h) a corrosion inhibitor and
(i) a superfatting agent intended to ensure the stability of the product foam.

8. Composition according to claim 7, characterized in that :
- the c) compound is used in an amount of 3 to 20%, preferably 5 to 15% of the total weight of the composition,
- the d) compound is used in an amount of 3 to 20%, preferably 5 to 15% of the total weight of the composition,
- the e) compound is used in an amount of 1 to 15%, preferably 2 to 5% of the total weight of the composition,
- the f) compound is used in an amount of 1 to 7%, preferably 2 to 4% of the total weight of the composition,
- the h) compound is used in an amount of 1 to 5%, preferably 2% of the total weight of the composition,
- the i) compound is used in an amount of 1 to 5%, preferably 1% of the total weight of the composition.

9. Composition according to one of the claims 1 to 8, characterized in that the a) compound is of the general formula : 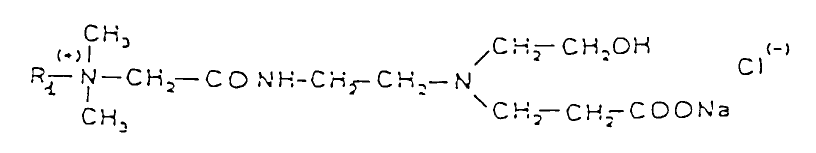 in which R₁ represents a saturated or unsaturated fatty acid chain.

10. Composition according to claim 9, characterized in that the a) compound is N[N'(N"-2-hydroxyethyl-N"-carboxyethylaminoethyl)amidoacetate]-N,N-dimethyl-N-coco-ammoniumbetaine.

11. Composition according to one of the claims 1 to 10 characterized in that the b) compound is of the general formula : 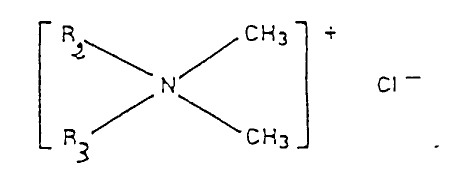 in which R₂ and R₃ are C₁ to C₁₅ alkyl groups.

12. Composition according to claim 11, characterized in that the b) compound is didecyldimethylammonium chloride.

13. Composition according to one of the claims 1 to 12, characterized in that the detergent nonionic biodegradable ethoxylated alcohol is a nonionic surface-active agent based on a saturated oxo alcohol of formula :
R₄O(CH₂CH₂O)_{X}H
where R₄ is i-C₁₃H₂₇ and x = 3, 5, 7, 8 or 12

14. Composition according to claim 13, characterized in that the detergent nonionic biodegradable ethoxylated alcohol is of the formula :
i-C₁₃H₂₇O(CH₂CH₂O)₈H

15. Composition according to one of the claims 3 to 14, characterized in that the lower alkanol is a mixture of C₁ to C₈ alcohols.

16. Composition according to claim 15, characterized in that the mixture of alcohols consists of ethanol and isopropanol.

17. Composition according to one of the claims 4 to 16, characterized in that the e) compound is of the general formula : 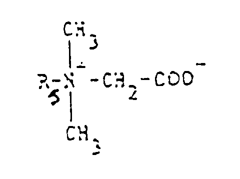 in which R₅ represents a saturated or unsaturated fatty acid residue.

18. Composition according to claim 17, characterized in that the e) compound is lauryldimethylcarboxymethylammonium betaine.

19. Composition according to one of the claims 5 to 18, characterized in that the f) compound is ethylenediaminetetraacetic acid of formula :

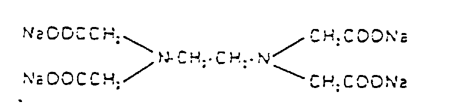

20. Composition according to one of the claims 6 to 19, characterized in that the g) compound is citric acid.

21. Composition according to one of the claims 7 to 20, characterized in that the h) compound is of the general formula : 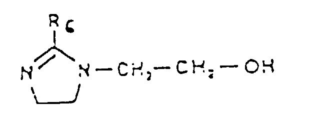 in which R₆ is a C₁₀ to C₂₀ alkyl radical.

22. Composition according to one of the claims 7 to 20, characterized in that the h) compound is 1-hydroxyethyl-2-heptadecenyl-imidazoline.

23. Composition according to one of the claims 7 to 22, characterized in that the i) compound is of the general formula : 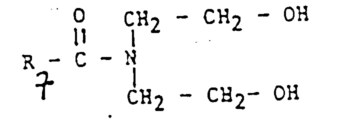 in which R₇ is a saturated or unsaturated fatty acid residue.

24. Composition according to claim 23, characterized in that the i) compound is the diethanolamide of oleic acid.

25. Composition according to one of the claims 1 to 24, characterized in that it contains :
- N[N' (N"-2-hydroxyethyl-N"-carboxyethylaminoethyl)-amido-acetate]-N,N-dimethyl-N-coco-ammonium betaine 7%
- didecyldimethylammonium chloride 13%
- ethoxylated isotridecanol containing 8 moles of ethylene oxide 7%
- ethanol-isopropanol 12%
- lauryldimethylcarboxymethylammonium betaine 3%
- ethylenediaminetetraacetic acid 3%
- 1-hydroxyethyl-2-heptadecenylimidazoline 1%
- diethanolamide of oleic acid 1%
- citric acid, sufficient amount to obtain a pH of 8.5 +/- 0.5.

## Patentansprüche

1. Reinigungsmittel/Dekontaminationsmittel-Zusammensetzung, insbesondere für chirurgische Instrumente, dadurch gekennzeichnet, daß sie umfaßt:
(a) eine amphotere Verbindung, auf die wenigstens eine quartäre Ammoniumgruppe aufgepfropft ist;
(b) eine kationische quartäre Ammoniumverbindung mit bakterizider Wirkung; und
(c) einen waschaktiven nichtionischen biologisch abbaubaren ethoxylierten Alkohol;
sowie dadurch, daß das Gewichtsverhältnis von b) : a) 1 bis 6 und vorzugsweise 2 beträgt.

2. Zusammensetzung gemäß Anspruch 1, dadurch gekennzeichnet, daß die Verbindung a) 5 bis 30%, vorzugsweise 5 bis 15%, des Gesamtgewichts der Zusammensetzung ausmacht.

3. Zusammensetzung gemäß einem der Ansprüche 1 und 2, dadurch gekennzeichnet, daß sie außerdem umfaßt:
d) wenigstens ein Gemisch von C₁- bis C₈-Alkoholen.

4. Zusammensetzung gemäß einem der Ansprüche 1 bis 3, dadurch gekennzeichnet, daß sie außerdem umfaßt:
e) ein amphoteres Detergens mit guter Hautverträglichkeit, das sich von Verbindung a) unterscheidet.

5. Zusammensetzung gemäß einem der Ansprüche 1 bis 4, dadurch gekennzeichnet, daß sie außerdem umfaßt:
f) ein Chelat.

6. Zusammensetzung gemäß einem der Ansprüche 1 bis 5, dadurch gekennzeichnet, daß sie außerdem umfaßt:
g) einen pH-Modifikator.

7. Zusammensetzung gemäß einem der Ansprüche 1 bis 6, dadurch gekennzeichnet, daß sie außerdem umfaßt:
h) einen Korrosionsinhibitor und
i) ein Überfettungsmittel, das die Stabilität des Schaums des Produkts gewährleisten soll.

8. Zusammensetzung gemäß Anspruch 7, dadurch gekennzeichnet, daß:
- die Verbindung c) in einer Menge von 3 bis 20%, vorzugsweise 5 bis 15%, des Gesamtgewichts der Zusammensetzung verwendet wird;
- die Verbindung d) in einer Menge von 3 bis 20%, vorzugsweise 5 bis 15%, des Gesamtgewichts der Zusammensetzung verwendet wird;
- die Verbindung e) in einer Menge von 1 bis 15%, vorzugsweise 2 bis 5%, des Gesamtgewichts der Zusammensetzung verwendet wird;
- die Verbindung f) in einer Menge von 1 bis 7%, vorzugsweise 2 bis 4%, des Gesamtgewichts der Zusammensetzung verwendet wird;
- die Verbindung h) in einer Menge von 1 bis 5%, vorzugsweise 2%, des Gesamtgewichts der Zusammensetzung verwendet wird;
- die Verbindung i) in einer Menge von 1 bis 5%, vorzugsweise 1%, des Gesamtgewichts der Zusammensetzung verwendet wird.

9. Zusammensetzung gemäß einem der Ansprüche 1 bis 8, dadurch gekennzeichnet, daß die Verbindung a) der allgemeinen Formel 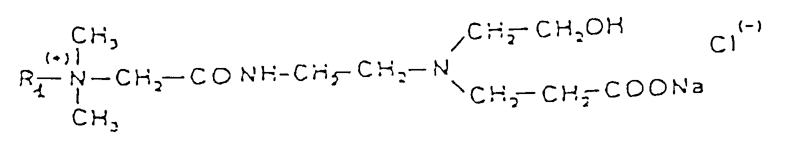 entspricht, in der R₁ eine gesättigte oder ungesättigte Fettsäurekette darstellt.

10. Zusammensetzung gemäß Anspruch 9, dadurch gekennzeichnet, daß es sich bei Verbindung a) um N[N' (N"-2-hydroxyethyl-N"-carboxyethylaminoethyl)amidoacetat]-N,N-dimethyl-N-kokos-ammonium-Betain handelt.

11. Zusammensetzung gemäß einem der Ansprüche 1 bis 10, dadurch gekennzeichnet, daß die Verbindung b) der allgemeinen Formel 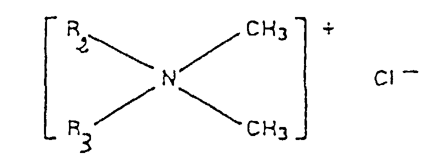 entspricht, in der R₂ und R₃ C₁- bis C₁₅-Alkylgruppen sind.

12. Zusammensetzung gemäß Anspruch 11, dadurch gekennzeichnet, daß es sich bei Verbindung b) um Didecyldimethylammoniumchlorid handelt.

13. Zusammensetzung gemäß einem der Ansprüche 1 bis 12, dadurch gekennzeichnet, daß der waschaktive nichtionische biologisch abbaubare ethoxylierte Alkohol ein nichtionisches Tensid auf der Basis eines gesättigten Oxoalkohols der Formel
R₄O(CH₂CH₂O)ₓH
ist, wobei R₄ i-C₁₃H₂₇ ist und x = 3, 5, 7, 8 oder 12.

14. Zusammensetzung gemäß Anspruch 13, dadurch gekennzeichnet, daß der waschaktive nichtionische biologisch abbaubare ethoxylierte Alkohol der Formel
i-C₁₃H₂₇O(CH₂CH₂O)₈H
entspricht.

15. Zusammensetzung gemäß einem der Ansprüche 3 bis 14, dadurch gekennzeichnet, daß es sich bei dem niederen Alkanol um ein Gemisch von C₁- bis C₈-Alkoholen handelt.

16. Zusammensetzung gemäß Anspruch 15, dadurch gekennzeichnet, daß das Gemisch der Alkohole aus Ethanol und Isopropanol besteht.

17. Zusammensetzung gemäß einem der Ansprüche 4 bis 16, dadurch gekennzeichnet, daß die Verbindung e) der allgemeinen Formel 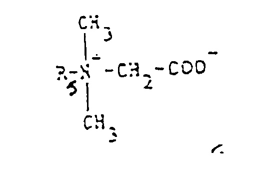 entspricht, in der R₅ einen Rest einer gesättigten oder ungesättigten Fettsäure darstellt.

18. Zusammensetzung gemäß Anspruch 17, dadurch gekennzeichnet, daß es sich bei Verbindung e) um Lauryldimethylcarboxymethylammonium-Betain handelt.

19. Zusammensetzung gemäß einem der Ansprüche 5 bis 18, dadurch gekennzeichnet, daß es sich bei Verbindung f) um Ethylendiamintetraessigsäure der Formel 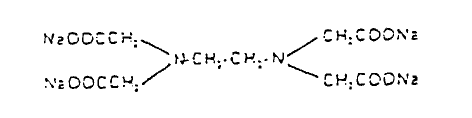 handelt.

20. Zusammensetzung gemäß einem der Ansprüche 6 bis 19, dadurch gekennzeichnet, daß es sich bei Verbindung g) um Zitronensäure handelt.

21. Zusammensetzung gemäß einem der Ansprüche 7 bis 20, dadurch gekennzeichnet, daß die Verbindung h) der allgemeinen Formel 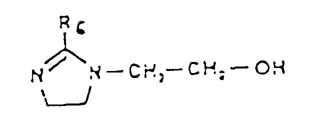 entspricht, in der R₆ ein C₁₀- bis C₂₀-Alkylrest ist.

22. Zusammensetzung gemäß einem der Ansprüche 7 bis 20, dadurch gekennzeichnet, daß es sich bei Verbindung h) um 1-Hydroxyethyl-2-heptadecenylimidazolin handelt.

23. Zusammensetzung gemäß einem der Ansprüche 7 bis 22, dadurch gekennzeichnet, daß die Verbindung i) der allgemeinen Formel 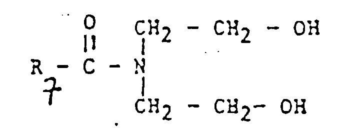 entspricht, in der R₇ ein Rest einer gesättigten oder ungesättigten Fettsäure ist.

24. Zusammensetzung gemäß Anspruch 23, dadurch gekennzeichnet, daß es sich bei Verbindung i) um Oleinsäurediethanolamid handelt.

25. Zusammensetzung gemäß einem der Ansprüche 1 bis 24, dadurch gekennzeichnet, daß sie umfaßt:
- N[N' (N"-2-hydroxyethyl-N"-carboxyethylaminoethyl)amidoacetat]-N,N-dimethyl-N-kokosammonium-Betain 7%
- Didecyldimethylammoniumchlorid 13%
- ethoxyliertes Isotridecanol mit 8 mol Ethylenoxid 7%
- Ethanol/Isopropanol 12%
- Lauryldimethylcarboxymethylammonium-Betain 3%
- Ethylendiamintetraessigsäure 3%
- 1-Hydroxyethyl-2-heptadecenylimidazolin 1%
- Oleinsäurediethanolamid 1%
- Zitronensäure in ausreichender Menge, um einen pH von 8,5 ± 0,5 zu erhalten.
